(19) Europäisches Patentamt
European Patent Office
Office européen des brevets

(11) Veröffentlichungsnummer : **0 033 296**
**B1**

(12) # EUROPÄISCHE PATENTSCHRIFT

(45) Veröffentlichungstag der Patentschrift : **05.10.83**

(51) Int. Cl.³ : **C 09 B 67/48**, C 09 B 29/085, C 09 B 67/10

(21) Anmeldenummer : **81810001.8**

(22) Anmeldetag : **05.01.81**

(54) **Färbestabiler Dispersionsfarbstoff und dessen Verwendung zum Färben synthetischer und halbsynthetischer Fasermaterialien.**

(30) Priorität : **09.01.80 CH 133/80**

(43) Veröffentlichungstag der Anmeldung : **05.08.81 Patentblatt 81/31**

(45) Bekanntmachung des Hinweises auf die Patenterteilung : **05.10.83 Patentblatt 83/40**

(84) Benannte Vertragsstaaten : **CH DE FR GB LI**

(56) Entgegenhaltungen :
**DE A 2 101 912**
**FR A 2 304 650**
**US A 2 687 410**

(73) Patentinhaber : **CIBA-GEIGY AG**
**Patentabteilung Postfach**
**CH-4002 Basel (CH)**

(72) Erfinder : **Koller, Stefan, Dr.**
**Zelglistrasse**
**CH-4431 Ramlinsburg (CH)**
Erfinder : **Eugster, Peter, Dr.**
**Mattweg 96**
**CH-4144 Arlesheim (CH)**
Erfinder : **Agarwal, Suresh C., Dr.**
**Falkenstrasse 10**
**CH-4103 Bottmingen (CH)**

**EP 0 033 296 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Färbestabiler Dispersionsfarbstoff und dessen Verwendung zum Färben synthetischer und halbsynthetischer Fasermaterialien

Die vorliegende Erfindung betrifft eine neue färbestabile kristallographische Modifikation des Azofarbstoffes der Formel

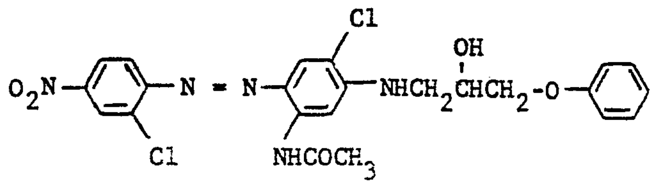

die durch das in Fig. 1 gezeigte, mit CuK-α-Strahlung aufgenommene Röntgenbeugungsdiagramm mit den charakteristischen Reflexen und die aus dem Beugungsbild errechneten d-Werte der Netzebenenabstände charakterisiert ist, wobei im folgenden nur die Linien sehr starker (ss) und starker (s) relativer Intensität berücksichtigt sind :

d [Å] : 11.9 (s), 7.2 (ss), 3.61 (ss), 3.39 (ss).

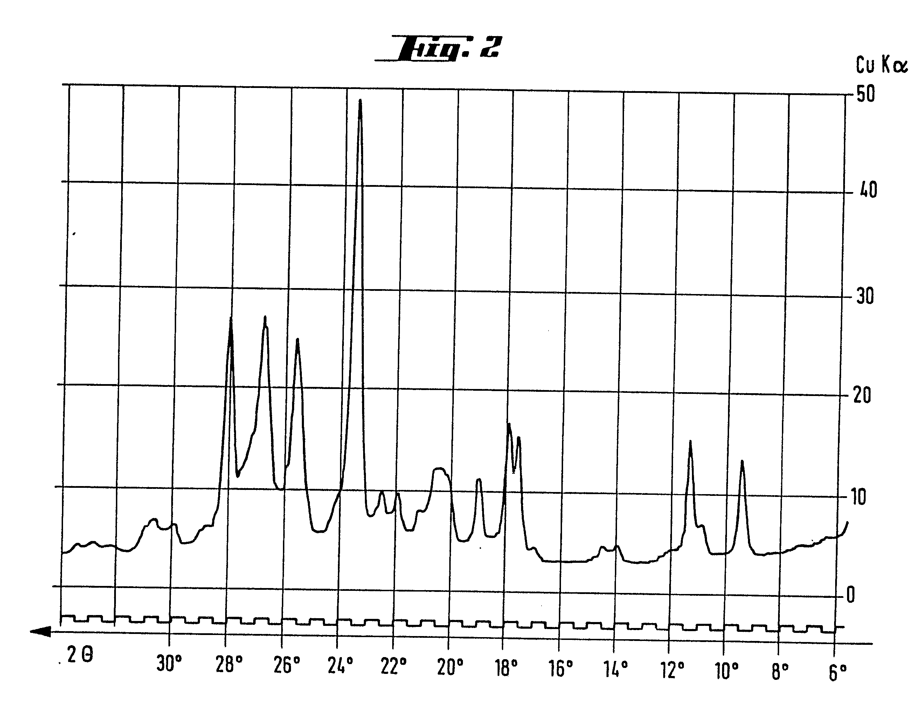

Bekannt ist die im folgenden als α-Modifikation bezeichnete Modifikation des Farbstoffes vorstehend genannter Formel, die das in Fig. 2 gezeigte Röntgenbeugungsdiagramm und die folgenden d-Werte der Netzebenenabstände aufweist :

d [Å] : 9.5 (s), 7.9 (s), 5.10 (s), 5.00 (s), 3.79 (ss), 3.48 (s), 3.34 (s), 3.19 (s).

Der Farbstoff ist bekannt als Dispersionsfarbstoff zum Färben und Bedrucken von Textilmaterial, insbesondere von Polyesterfasermaterial.

Der Farbstoff kann nach dem in der deutschen Patentschrift 21 01 912 genannten Verfahren durch Kuppeln von diazotiertem 2-Chlor-4-nitro-anilin und 1-[N-(β-Hydroxy-γ-phenoxy-propyl)-amino]-2-chlor-5-acetylamino-benzol hergestellt werden. Die so gewonnene bekannte Modifikation ist unter den in der Färbeflotte auftretenden Bedingungen nicht ausreichend färbestabil.

Die neue färbestabile Modifikation gemäss vorliegender Erfindung, die im folgenden als β-Modifikation bezeichnet wird, wird durch Erhitzen der α-Modifikation tel quel, vorteilhaft im Vakuum oder suspendiert in einem praktisch wasserfreien organischen Lösungsmittel, zweckmässigerweise über einen Zeitraum von 0,5 bis 20 Stunden auf Temperaturen von 65 bis 200 °C, erhalten. Vorteilhaft wird der feste Farbstoff 4 bis 12 Stunden auf Temperaturen von 100 bis 170 °C oder als Suspension in organischen Lösungsmitteln, gegebenenfalls unter Druck, 0,5 bis 5 Stunden auf 90 bis 140 °C erhitzt.

Dabei geht man zweckmässig vom feuchten Pressgut der α-Modifikation, wie es bei der Herstellung des Farbstoffes nach dem Kuppeln anfällt, aus oder man trocknet das feuchte Pressgut vor und zwar im Vakuum bei Temperaturen von 20 bis 50 °C.

Eine Modifikationsumwandlung in wässrigem Medium, z. B. durch direktes Erhitzen der Kupplungssuspension, tritt überraschenderweise bei diesem Farbstoff nicht ein.

Die Umwandlung lässt sich mittels Bestimmung von Schmelzpunkten bzw. Aufnahmen von Röntgenbeugungsspektren leicht verfolgen.

Als erfindungsgemässe organische Lösungsmittel kommen vor allem mit Wasser nicht mischbare, insbesondere aromatische Lösungsmittel mit einem Siedebereich von 70 bis 220 °C in Betracht. Namentlich genannt seien : Tetrachlorkohlenstoff, Chloroform und vor allem Chlorbenzol, o-Dichlorbenzol, Toluol, Xylol oder Nitrobenzol.

Ausserdem kommen auch hochmolekulare Polyalkylenglykole, wie z. B. Polyäthylenglykol 6 000, in Frage.

Die neue färbestabile β-Modifikation kann z. B. durch 4- bis 12 stündiges Erhitzen der färbeinstabilen α-Modifikation als fester Farbstoff auf Temperaturen zwischen 65 bis 200 °C, vorteilhaft 100 bis 170 °C, zweckmässig im Vakuum, erhalten werden.

Ferner lässt sich die α-Modifikation, die z. B. zunächst 1 bis 2 Tage bei Raumtemperatur vorgetrocknet wurde, durch Erhitzen als Suspension in einem praktisch wasserfreien apolaren organischen Lösungsmittel, vorteilhaft in einem aromatischen Lösungsmittel, wie z. B. Chlorbenzol, während 0,5 bis 5 Stunden auf Temperaturen zwischen 65 und 200 °C, vorteilhaft 90 und 140 °C, in die β-Modifikation überführen.

Das Erhitzen der Suspension erfolgt gegebenenfalls unter Druck. Genannt seien z. B. 4 stündiges Erhitzen in Tetrachlorkohlenstoff bei 80 °C, dreistündiges Erhitzen in Chloroform auf 65 °C, vierstündiges Erhitzen in Chlorbenzol auf 80 °C, vorteilhaft auf 130 °C, oder zweistündiges Erhitzen in Polyäthylenglykol 6 000 auf 80 °C.

Um zum Färben und Drucken technisch geeignete Farbstoffpräparate zu erhalten, kann die erfindungsgemässe β-Modifikation durch übliche mechanische Verfahren, gegebenenfalls in Gegenwart von Wasser und geeigneter Dispergiermittel und anderer üblicher Zusätze in hohe Feinverteilung übergeführt werden.

Für die gegebenenfalls vorzunehmende Feinverteilung eignen sich die üblichen Vorrichtungen, wie Mühlen, beispielsweise Kugelmühlen, Schwingmühlen, Sandmühlen oder Kneter. Als Dispergiermittel

kommen beispielsweise Kondensationsprodukte von ein- oder mehrkernigen aromatischen Verbindungen, wie Naphthalin, Naphthole, Phenole oder deren Sulfonsäuren, mit Formaldehyd oder anderen Substanzen, die mit aromatischen Ringen kondensieren können, wie Harnstoff, Aethylenoxid oder Isocyanate, gegebenenfalls unter Zusatz von Natriumsulfit, ferner Ligninsulfonate und nichtionische und anionische oberflächenaktive Verbindungen in Betracht.

Die in hohe Feinverteilung übergeführte neue Farbstoffmodifikation eignet sich vorzüglich zum Färben von synthetischen und halbsynthetischen Textilmaterialien, wie synthetischen linearen Polyestern, z. B. Polyäthylenglykolterephthalat oder chemisch analog aufgebauten Polymeren und von halbsynthetischen Fasermaterialien, wie Cellulosetriacetat bei Temperaturen von ungefähr 100 bis 220 °C. Die neue Farbstoffmodifikation ist unter Färbebedingungen dispersionsstabil und weist dabei nicht die Nachteile der auf übliche Weise erhältlichen instabilen Modifikation des genannten Farbstoffes auf, bei Färbeverfahren, bei denen sie längere Zeit im wässrigen Medium einer höheren Temperatur ausgesetzt ist, zu Farbstoffausflockungen und Abfiltrationen zu führen, die oft ungleichmässige Färbungen mit schlechten Reibechtheiten liefern. Insbesondere beim Färben von Wickelkörpern — beispielsweise Kreuzspulen — treten auch dann keine Agglomeration, Flockung und schliesslich Abfiltration des Farbstoffes an den Spulen auf, wenn die Färbeflotte nur langsam erschöpft wird oder wenn mit einem so grossen Farbstoffüberschuss gearbeitet wird, dass niemals eine Erschöpfung des Färbebades eintritt. Deshalb ist die neue Farbstoffmodifikation besonders in der Apparatefärberei für loses Material und beim Färben von Spulen oder von Garnen hervorragend geeignet.

In den folgenden Beispielen beziehen sich Angaben über Teile, sofern nicht anders vermerkt, auf das Gewicht.

Das Röntgenbeugungsbild wurde mit CuK-α-Strahlung (λ = 1.540 5 Å) aufgenommen. Als Eichsubstanz wurde α-Quarz verwendet. Dessen d-Werte sind aus a = 4.913 Å und c = 5.405 Å berechnet. Die relativen Linienintensitäten sind visuell geschätzt.

## Beispiel 1

30 Teile Pressgut der α-Modifikation des durch Kupplung von diazotiertem 2-Chlor-4-nitroanilin mit 1-[N-(β-Hydroxy-γ-phenoxy-propyl)-amino]-2-chlor-5-acetylamino-benzol erhaltenen Farbstoffes werden in einem Vakuumtrockenschrank während 10 Stunden auf 100 bis 110 °C bis zur Gewichtskonstanz erhitzt. Der so vollständig in die β-Modifikation umgewandelte Farbstoff ergibt nach dem Abkühlen und Feinverteilung eine färbestabile Dispersion, die für das Färben von Textilmaterial aus Polyester hervorragend geeignet ist.

Wenn man wie im obigen Beispiel beschrieben verfährt, jedoch den rohen Farbstoff im Vakuumtrockenschrank während 10 Stunden auf 140 bis 145 °C bis zur Gewichtskonstanz erhitzt, erhält man ein gleich gutes Ergebnis.

## Beispiel 2

30 Teile des nach der DE-C 21 01 912 durch Kupplung von diazotiertem 2-Chlor-4-nitroanilin mit 1-[N-(β-Hydroxy-γ-phenoxy-propyl)-amino]-2-chlor-5-acetylamino-benzol erhaltenen und im Vakuum bei 40 bis 50 °C bis zur Gewichtskonstanz getrockneten Farbstoffes der α-Modifikation vom Smp. 132-136 °C werden in 900 ml Chlorbenzol suspendiert und die Suspension während 4 Stunden am Rückfluss gekocht. Nach dem Abkühlen wird der in der stabilen β-Modifikation erhaltene Farbstoff vom Smp. 170-5 °C abfiltriert. Nach der Feinverteilung erhält man eine färbestabile Dispersion, die beim, in üblicher Weise durchgeführten, Färben von Textilmaterial aus Polyester, egale Färbungen liefert. Der Farbstoff ist unter Färbebedingungen in der flotte stabil, d. h. zeigt kein Kristallwachstum oder sonstige Veränderungen des Einzelkorns.

## Beispiel 3

10 Teile der nach Beispiel 1 hergestellten, färbestabilen β-Modifikation des Farbstoffes werden unter Zusatz von 5 Teilen eines Kondensationsproduktes einer Naphthalinsulfonsäure mit Formaldehyd in 60 Teilen Wasser mittels einer Glasperlenmühle bis zu einer ausreichenden Feinverteilung gemahlen. Anschliessend gibt man 15 Teile eines Oxyligninsulfonates zu und trocknet in einer Sprühapparatur.

In einem Druckfärbeapparat werden 40 g der so erhaltenen Farbstoffdispersion in 40 Liter Wasser von 70 °C, das 4 g Oleylpolyglykoläther enthält, suspendiert. Der pH-Wert des Färbebades wird mit Essigsäure auf 4 bis 5 eingestellt. Damit färbt man einen Wickelkörper aus 2 000 g Polyäthylenglykolterephthalatgarn, indem man die Temperatur des Färbebades innerhalb von 30 Minuten von 70 auf 130 °C erhöht und 50 Minuten bei dieser Temperatur hält. Nach der üblichen Fertigstellung der Färbung erhält man einen egal rotgefärbten Wickelkörper ohne Flecken oder Farbstoffablagerungen.

Verwendet man 10 Teile der nach Beispiel 1 erhaltenen färbeinstabilen α-Modifikation des Farbstoffes und verfährt im übrigen wie im obigen Beispiel angegeben, so erhält man eine rote jedoch unegale, unbrauchbare, reibunechte Färbung mit Farbstoffablagerungen auf der Oberfläche des gefärbten Materials.

## Ansprüche

1. Färbestabile Modifikation des Azofarbstoffes der Formel

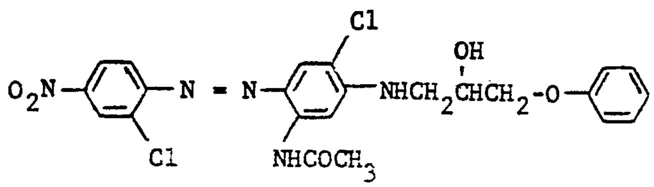

gekennzeichnet durch das in Fig. 1 gezeigte Röntgenbeugungsdiagramm (CuK-α-Strahlung) mit den charakteristischen Reflexen und die aus dem Beugungsbild errechneten d-Werte der Netzebenenabstände:

d [Å] : 11.9 (s), 7.2 (ss), 3.61 (ss), 3.39 (ss).

2. Verfahren zur Herstellung der färbestabilen β-Modifikation des Azofarbstoffes gemäss Anspruch 1, dadurch gekennzeichnet, dass man die färbeinstabile α-Modifikation des Farbstoffes der angegebenen Formel, die das in Fig. 2 gezeigte Röntgenbeugungsdiagramm mit den charakteristischen Reflexen und die folgenden d-Werte der Netzebenenabstände

d [Å] : 9.5 (s), 7.9 (s), 5.10 (s), 5.00 (s), 3.79 (ss), 3.48 (s), 3.34 (s), 3.19 (s),

aufweist, während 0,5 bis 20 Stunden auf Temperaturen zwischen 65 und 200 °C erhitzt.

3. Verfahren gemäss Anspruch 2, dadurch gekennzeichnet, dass man vom festen Farbstoff der α-Modifikation ausgeht und diesen während 4 bis 12 Stunden auf Temperaturen zwischen 100 und 170 °C erhitzt.

4. Verfahren nach Anspruch 2, dadurch gekennzeichnet, dass man den färbeinstabilen Farbstoff der angegebenen Formel als Suspension in einem organischen Lösungsmittel, gegebenenfalls unter Druck, während 0,5 bis 5 Stunden auf Temperaturen von 90 bis 140 °C erhitzt.

5. Verfahren nach Anspruch 4, dadurch gekennzeichnet, dass man als organisches Lösungsmittel ein aromatisches Lösungsmittel mit einem Siedebereich von 70 bis 220 °C, insbesondere Chlorbenzol, verwendet.

6. Verwendung der färbestabilen β-Modifikation des Azofarbstoffes gemäss Anspruch 1 zum Färben von synthetischen oder halbsynthetischen Fasermaterialien.

## Claims

1. A modification of the azo dye of the formula

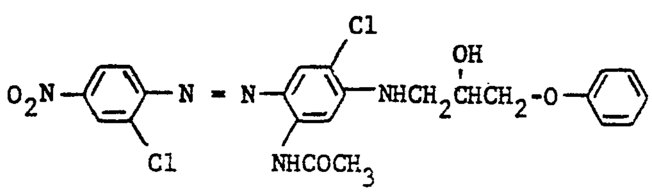

which modification is stable to dyeing and which is characterised by the X-ray diffraction pattern (CuK-α radiation) with the characteristic reflexes shown in Fig. 1, and by the d values of the interplanar spacings, calculated from the diffraction pattern:

d [Å] : 11.9 (s), 7.2 (ss), 3.61 (ss) and 3.39 (ss).

2. A process for producing the β-modification stable to dyeing of the azo dye according to Claim 1, wherein the α-modification of the dye of the given formula, which modification is unstable to dyeing, and which is characterised by the X-ray diffraction pattern with the characteristic reflexes shown in Fig. 2, and by the following d values of the interplanar spacings:

d [Å] : 9.5 (s), 7.9 (s), 5.10 (s), 5.00 (s), 3.79 (ss), 3.48 (s), 3.34 (s) and 3.19 (s),

is heated for 0.5 to 20 hours at a temperature of between 65 and 200 °C.

3. A process according to Claim 2, wherein the solid dye of the α-modification is used as starting material and is heated for 4 to 12 hours at a temperature of between 100 and 170 °C.

4. A process according to Claim 2, wherein the dye of the given formula, which is unstable to dyeing, is heated in the form of a suspension in an organic solvent, optionally under pressure, for 0.5 to 5 hours at a temperature of between 90 and 140 °C.

5. A process according to Claim 4, wherein the organic solvent used is an aromatic solvent having a boiling range of 70 to 220 °C, particularly chlorobenzene.

6. A process for dyeing synthetic or semi-synthetic fibre material by application of the β-modification

of the azo dye according to Claim 1, which modification is stable to dyeing.

**Revendications**

1. Forme stable en couleur du colorant azoïque de formule

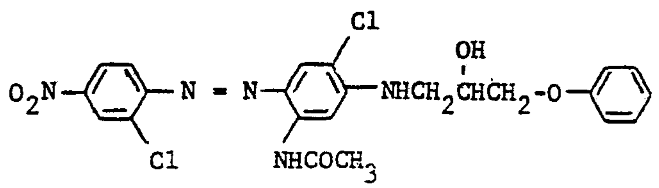

caractérisée par le diagramme de diffraction des rayons X indiqué sur la figure 1 (radiation CuK-α) avec les réflexions caractéristiques et les valeurs d des distances des plans réticulaires calculées à partir du diagramme de diffraction suivantes :

d [Å] : 11,9 (s), 7,2 (ss), 3,61 (ss), 3,39 (ss).

2. Procédé pour la préparation de la forme β stable en couleur du colorant azoïque selon la revendication 1, caractérisé par le fait qu'on chauffe pendant 0,5 à 20 heures à des températures comprises entre 65 et 200 °C, la forme α instable en couleur du colorant de formule mentionnée, qui présente le diagramme de diffraction des rayons X mentionné sur la figure 2 avec les réflexions caractéristiques et qui présente les valeurs d des distances des plans réticulaires suivantes :

d [Å] : 9,5 (s), 7,9 (s), 5,10 (s), 5,00 (s), 3,79 (ss), 3,48 (s), 3,34 (s), 3,19 (s).

3. Procédé selon la revendication 2, caractérisé par le fait qu'on part du colorant solide de la forme α et qu'on chauffe celle-ci pendant 4 à 12 heures à des températures comprises entre 100 et 170 °C.

4. Procédé selon la revendication 2, caractérisé par le fait qu'on chauffe, éventuellement sous pression, pendant 0,5 à 5 heures, à des températures de 90 à 140 °C, le colorant instable ayant la formule donnée sous forme d'une suspension dans un solvant organique.

5. Procédé selon la revendication 4, caractérisé par le fait qu'on utilise comme solvant organique un solvant aromatique ayant une plage d'ébullition de 70 à 220 °C, en particulier le chlorobenzène.

6. Utilisation de la forme β stable en couleur du colorant azoïque selon la revendication 1, pour teindre des matières fibreuses synthétiques ou semi-synthétiques.

Fig. 1

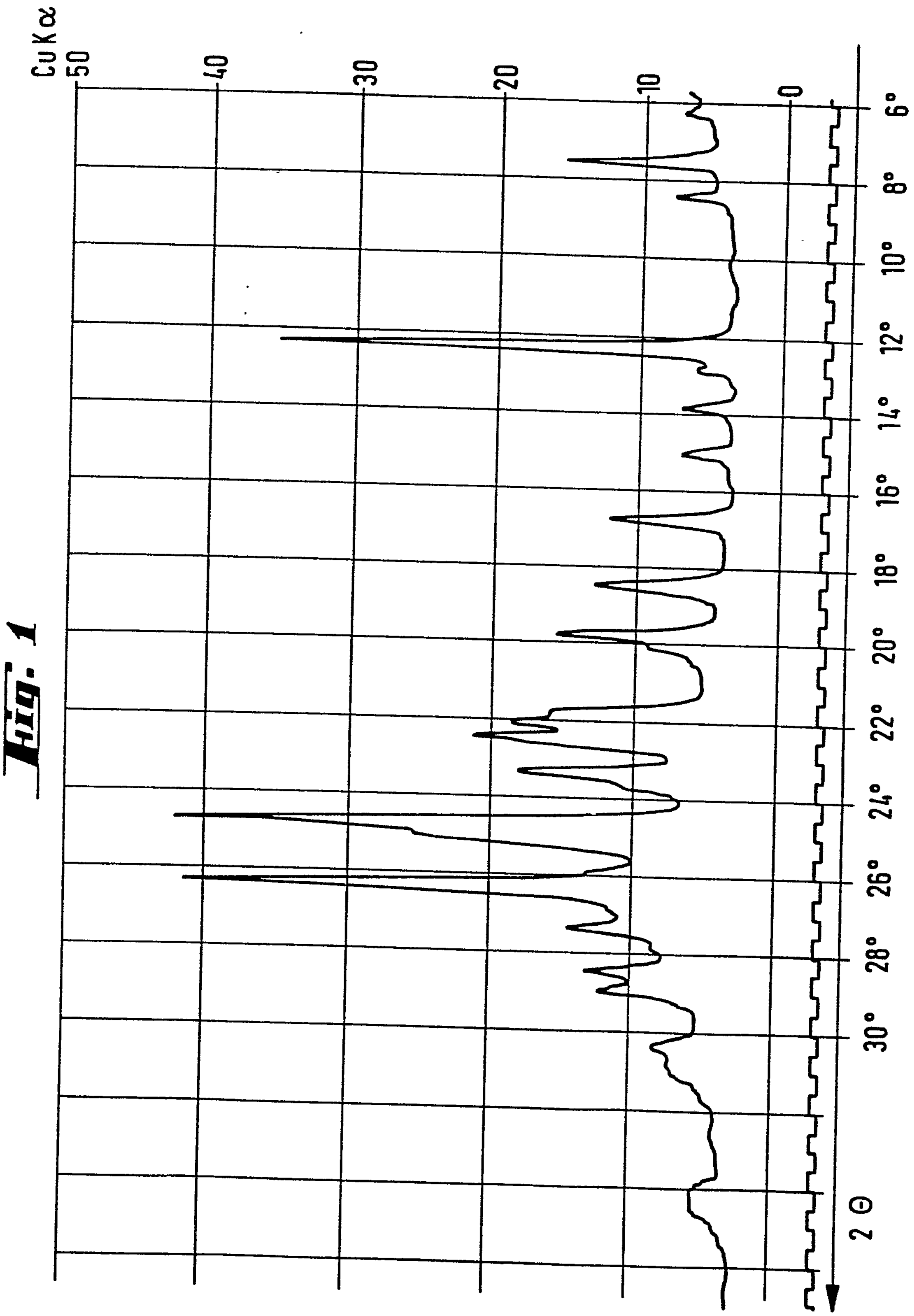

Fig. 2